# EUROPEAN PATENT APPLICATION

(11) **EP 0 609 546 A2**
(43) Date of publication of application: **10.08.1994**
(21) Application number: 93120552.0
(22) Date of filing: 20.12.1993
(51) Int. Cl.: G11B 23/087, G11B 23/04

(54) **Integrated light reflecting structure for use in a magnetic tape cartridge**

(30) Priority: 02.02.1993 US 21061
(71) Applicant: VERBATIM CORPORATION, Charlotte, North Carolina 28262 (US)
(72) Inventor: Stanley, Donald, San Diego, California (US); Sheppard, Kenneth, San Diego, California (US); Skaar, Leif, San Diego, California (US)
(74) Representative: Liesegang, Roland, Dr.-Ing.

(57) **Abstract**

A light reflecting structure for use in a magnetic tape cartridge is disclosed. The structure comprises a reflecting prism, an optical window, and a bridge. The prism comprises a first optical surface, a second optical surface oriented substantially orthogonally with respect to the first surface, and a third reflective surface oriented at an angle with respect to the first surface for reflecting optical signals between the first and second surfaces. The optical window is a transparent piece of material oriented relative to the prism to pass optical signals to and from the prism. The bridge connects the prism with the window to form a single light reflecting structure. The structure is incorporated into a magnetic tape cartridge for use in detecting the beginning and the end of the tape within the cartridge which includes a baseplate having an aperture therein, a plurality of sidewalls, a front wall having an opening, a supply of magnetic tape the light reflecting structure, and a top cover. The light reflecting structure is mounted onto the baseplate to cover the aperture in the baseplate and the window covers the opening in the front wall. The tape path for the supply of tape within the cartridge passes between the prism and the window of the light reflecting structure.

## Description

### Field of the Invention

This invention relates to magnetic tape cartridges and more specifically to a magnetic tape cartridge having an integrated light reflecting structure comprising a reflecting prism, an optical window, and a bridge.

### Background of the Invention

In recent years, magnetic tape has become a popular medium for mass-storing electronic data. Magnetic tapes have mostly been used for storing data from a mass storage device, such as a hard disk drive, to "back-up" the storage device. To facilitate insertion and removal from tape reading and writing devices, and thus, enhance the usefulness of the tape, magnetic rape is typically housed within a tape cartridge.

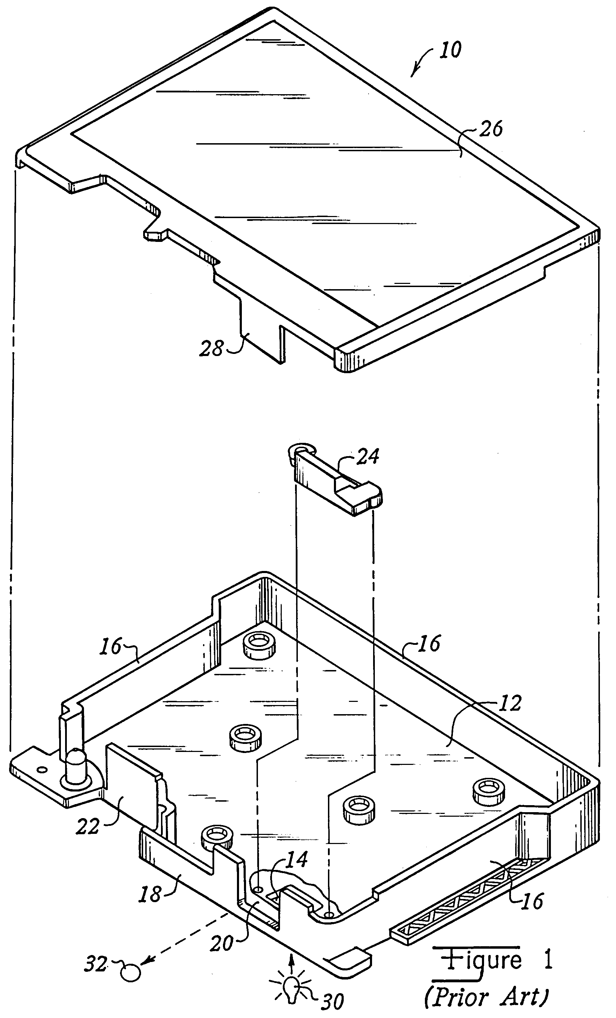

Referring to Fig. 1, there is shown an exploded view of a typical prior art tape cartridge, wherein the cartridge 10 comprises a baseplate 12 having an aperture 14, a plurality of sidewalls 16, a front wall 18 having an opening 20 and a recess 22, a light reflecting prism 24, and a top cover 26 having a tab 28 extending downward and away from the cover. When the cartridge 10 is assembled, the prism 24 is placed over the aperture 14 in the baseplate 12, and the top cover 26 is placed over the sidewalls 16 and front wall 18 and positioned so as to fit the tab 28 within the opening 20 in the front wall 18. Light from the light source 30 beneath the baseplate 12 enters the cartridge through aperture 14 and is reflected by the prism 24 towards the tab or window 28. The window 28, which is typically formed of transparent polycarbonate material, is optically aligned with the prism 24 to pass all optical signals received from the prism 24 to the light sensor 32. Together, the prism 24 and the window 28 form the light reflecting system of the tape cartridge 10.

This light reflecting system is used to detect the beginning and the end of the tape (not shown) housed within the cartridge 10. To elaborate, the tape within the cartridge passes around tape guides placed in the forward corners of the cartridge 10 to establish a tape path. A portion of the tape path passes between the prism 24 and the window 28. As the tape moves about within the cartridge, different portions of the tape pass between the prism 24 and the window 28. The tape which is typically opaque prevents light from passing through the prism 24 to or from the window 28. However, holes are formed in the beginning and the end of the tape to allow light from the prism 24 to reach the window 28. Only when these holes pass between the prism 24 and the window 28 does a light sensor 32 detect any light passing through the tape and prism. The light sensor 32, therefore, can be used as a mechanism for detecting the beginning and the end of the magnetic tape.

While this prior art tape cartridge 10 functions adequately to detect the beginning and the end of the tape, the design of the cartridge and in particular, the design of the top cover 26, poses significant manufacturing problems. First, the top cover 26, because of the tab 28, is difficult and expensive to form using typical molding techniques. Injection molding tools that are commonly designed to accomodate a thin tab at right angles to the main body of the molded port are expensive and difficult to produce due to the excessive draft and polishing required to ensure an accurately molded port. Second, removal of the cover from the mold generally poses difficulties. Because the tab stands apart from the body of the cover, great care is required to remove the cover from the mold to ensure that the tab is not detached from the body of the cover. Even with great care, however, damage to the tab oftentimes cannot be averted. Third, the prior art cover is not as structurally sound as would be desired. The tab is a single piece of relatively thin material such as polycarbonate which extends away from the body of the cover. This makes the tab prone to breakage due to accidental contact with other objects. Because of these shortcomings in the prior art cartridge design, there exists a need for an improved tape cartridge including an optical signalling path therethrough. which is easier to manufacture and which is more structurally sound.

### Summary of the Invention

In accordance with the present invention the optical window is not manufactured as part of the top cover but instead is integrated with the light reflecting prism to form an integrated structure of a single, optically clear plastic material such as acrylic which can be fastened as a unit to the baseplate of a tape cartridge. This eliminates the manufacturing problems associated with the prior art cover. The present invention provides an integrated light reflecting structure comprising a light reflecting prism, an optical window, and a bridge. The prism comprises a first optical surface for passing optical signals to and from the prism, a second optical surface oriented substantially orthogonally with respect to the first surface for passing optical signals to and from the prism, and a third reflective surface oriented at a selected angle with respect to the first surface for reflecting optical signals between the first and second surfaces. The optical window, which is preferably a flat sheet of transparent material, is placed relative to the prism to pass optical signals to and from the prism. The bridge of the structure has one end attached to the prism and a second end attached to the optical window. In essence, the bridge structurally binds the window to the prism to form a single integrated structure that is formed of a single plastic material such as acrylic.

This integrated structure may be incorporated into a tape cartridge to form an improved cartridge. Such a tape cartridge comprises a baseplate having an aperture therein, a plurality of sidewalls, a front wall having an opening, a supply of magnetic tape, a top cover, and an integrated structure of the present invention. The integrated structure, comprising the reflecting prism and the optical window, is bonded as a single unit to the baseplate such that the first surface of the prism fully covers the aperture in the baseplate, and the optical window covers the opening in the front wall. Thus, the integrated structure serves to cover both the aperture in the baseplate and the opening in the front wall. A supply of optically opaque tape preferably is wound around take-up and supply tape hubs and passes around tape guides located in forward corners within the cartridge to form a tape path. A portion of the tape path passes between the second surface of the prism and the optical window to prevent light from passing between the window and the prism. This supply of tape preferably has either holes or transparent sections at the beginning and the end of the tape to allow light to pass between the window and the prism, thereby allowing the beginning and the end of the tape to be detected. To complete the tape cartridge, the top cover is placed over the sidewalls and the front wall to enclose the tape within the tape cartridge.

The tape cartridge of the present invention overcomes the shortcomings of the prior art cartridge. First, the cartridge of the present invention is easily manufactured. Since the optical window is integrated with the reflecting prism, the top cover need not include a tab-like window extending away from the body of the cover. Thus, the cover need only be a flat top cover which can be easily manufactured using general molding techniques. Also, because the top cover has no tab-like window, no special care need be exercised in removing it from the mold. The integrated structure of the present invention can be produced relatively easily as an integral structure using known molding techniques. Second, the cartridge of the invention is improved over the prior art because the invention to include a reflecting prism and an optical window held together by a bridge. is more structurally sound. Because the optical window is integrated with the prism to form a single unit, there is no need for a top cover having a tab which can be easily broken. Hence, the structural integrity of the cartridge is improved. Overall, the present invention overcomes the shortcomings of the prior art and provides an improved tape cartridge.

### Brief Description of the Drawings

Fig. 1 is an exploded perspective view of a prior art magnetic tape cartridge.

Figs. 2a and 2b are a perspective and a bottom view, respectively, of a preferred embodiment of the integrated light reflecting structure of the present invention.

Fig. 3 is a side view of the preferred embodiment of the integrated light reflecting structure of Figures 2a and 2b.

Fig. 4 is an exploded perspective view of the partial skeleton of a preferred embodiment of the tape cartridge of the present invention.

Fig. 5 is a top view of the baseplate of the tape cartridge of the invention before the integrated light reflecting structure is mounted thereon.

Fig. 6 is a top view of the baseplate of the tape cartridge of the invention after the integrated light reflecting structure is mounted thereon.

### Detailed Description of the Preferred Embodiment

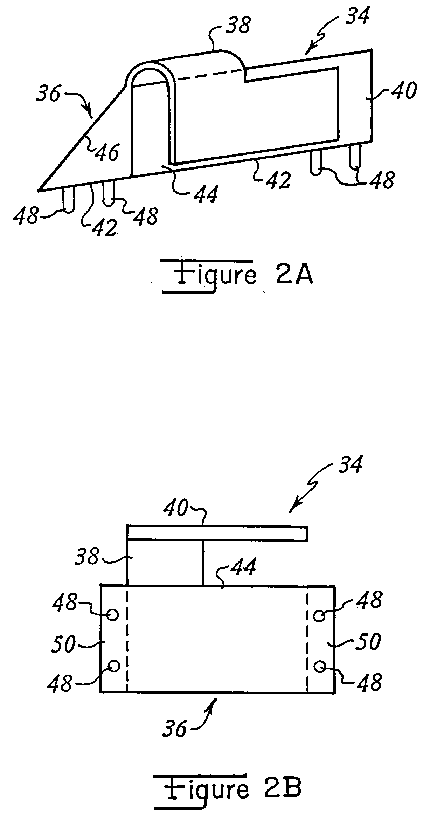

Referring to Figs. 2a and 2b, there are shown a perspective view and a bottom view, respectively, of a preferred embodiment of the light reflecting structure 34 of the present invention. The structure 34 comprises a light reflecting prism 36, a bridge 38, and an optical window 40. The prism 36 preferably takes the form of a triangular prism having three main surfaces including a first optical surface 42, a second optical surface 44 oriented substantially orthogonally with respect to the first surface 42, and a third reflective surface 46 oriented at a selected angle with respect to the first and second surfaces 42, 44. The first and second surfaces 42, 44 are both preferably transparent to freely pass optical signals into and out of the prism 36. The third reflective surface 46 is angled with respect to the first 42 and second 44 surfaces to reflect optical signals received from one surface to the other. That is, optical signals entering the prism through the first surface 42 are reflected toward the second surface 44, and optical signals entering through the second surface 44 are reflected toward the first surface 42. While the three surfaces 42, 44, 46 of the prism 36 may be curved or may take various other shapes, they are preferably all flat surfaces to simplify the manufacture and the design of the prism 36.

The prism 36 preferably further comprises side extensions 50 (Fig. 2b) which extend from the sides of the prism 36. Imbedded within, and protruding downward from, the side extensions 50 are pegs 48 which are designed to facilitate the incorporation of the structure 34 into the baseplate of a tape cartridge. Pegs 48 are inserted into designated holes within the baseplate and bonded thereto to secure the structure 34 to the baseplate of the cartridge. This will be described in more detail in a subsequent section.

Spaced away from, and directly in front of, the prism 36 is the optical window 40. The window 40 preferably is a piece of flat transparent material which is placed in optical alignment with the second surface 44 of the prism to freely pass optical signals to and from the prism 36. The window 40 is preferably spaced from the prism 36 a sufficient distance to allow a thickness of tape to fit between the prism 36 and the window 40. This configuration allows the structure 34 to be used as a light reflecting system for detecting the beginning and the end of a supply of tape housed within a tape cartridge. This will be elaborated upon in a later section.

The structure 34 further comprises a bridge 38 having one end attached to the prism 36 and the other end attached to the window 40. The bridge 38 structurally binds the window 40 to the prism 36 to form a single structure 34 which can be fastened, as a single unit, to the baseplate of a tape cartridge. Thus, the window 40 no longer needs to be part of the cover as in the prior art. In addition, the bridge 38 provides the necessary spacing between the prism 36 and the window 40 to accommodate a thickness of tape therebetween. The complete structure 34 of the invention shown in Figs. 2a and 2b may be constructed in various ways, but preferably, the structure 34 including the prism 36, window 40, and bridge 38 are all incorporated into a single integrated structure 34 formed of an acrylic plastic material having a single index of refraction in the prism and window 40. Such a structure may be formed using generally known molding techniques to provide accurate angular orientations of the optical surfaces as determined by the index of refraction of the one plastic material.

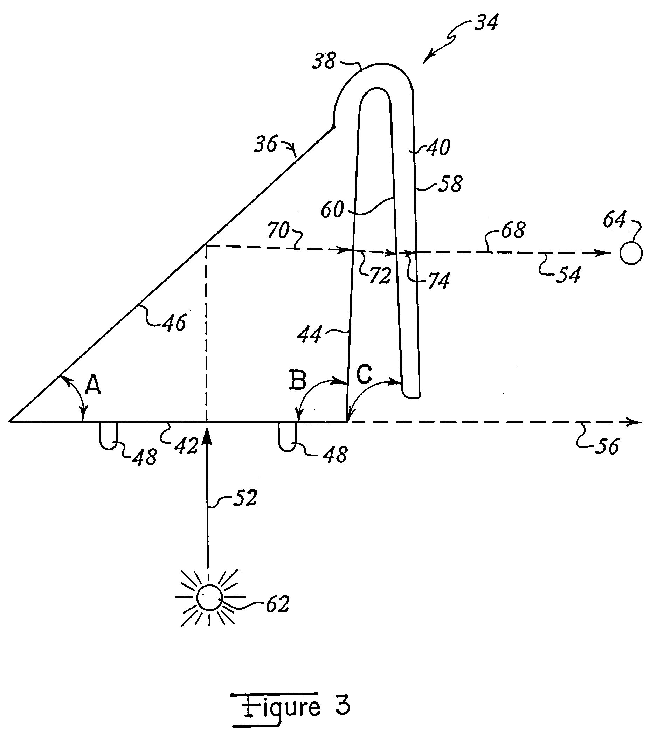

To describe the structure 34 of the invention in more detail, reference is made to Fig. 3, wherein a side view of the structure 34 is provided to show the relative angles of the surfaces of the prism 36 and the window 40. As shown in Fig. 3, the second surface 44 of the prism 36 is oriented at an angle B with respect to the first surface 42 of the prism 36 which is greater than a right angle, and the window 40 is oriented at an angle C with respect to the first surface 42 of the prism 36 which is less than a right angle. These non-right angles B, C form an inverted "V" with respect to the second surface 44 of the prism 36 and the optical window 40. These angles B, C may be chosen to facilitate the removal of the structure 34 from a mold (not shown) in which it is formed. Thus, as the structure 34 is removed from a mold, the angles B and C provide adequate draft between the structure 34 and the mold to facilitate its easy removal with adequate tolerances between mating surfaces, in known manner.

For the light reflecting structure 34 of the present invention, it is desirable for optical signals 52, entering the prism 36 orthogonally through the first surface 42, to be reflected by the reflective surface 46 and emerge from the optical window 40 along an optical path 54 which is parallel to the plane 56 of the first surface 42. In magnetic tape reading and writing devices which accept tape cartridges that meet ANSI Standard No. X3B5/90-218a, there is a light source 62 situated directly below the aperture in the baseplate of the cartridge (not shown), and a light sensor 64 situated directly in front of the window 40 as shown in Fig. 3. If the sensor 64 is to detect any light from the light source 62, the structure 34 must pass the light signals 52 to the light sensor 64 in proper alignment. Since the sensor 64 is relatively small and is placed directly in front of the window 40, the optical signals 68 emerging from the window 40 must have an optical path 54 which is substantially parallel to the plane 56. Only if this is true will the sensor 64 detect any of the emerging optical signals 68. Even slight deviations in optical path may misalign the signals 68 relative to the sensor 64 and cause the signals 68 to go completely undetected.

If the angles B and C are right angles, achieving an emerging signal optical path 54 which is parallel to the plane 56 simply requires setting the angle A between the first 42 and third 46 surfaces of the prism 36 to forty-five degrees. This is one possible embodiment of the structure 34 of the invention. However, in the illustrated preferred embodiment of the present invention shown in Fig. 3, the non-right angles B and C produce optical path deflections which must be compensated for to align the optical path 54 of the emerging optical signals 68 in parallel relationship to the plane 56 of the first surface. These path deflections may be compensated for by properly adjusting the angle A between the first 42 and third 46 surfaces of the prism 36.

As illustrated in the sectional view of Fig 3, incident light 52 enters the prism 36 substantially normal to the first surface 42 and is reflected toward the second surface 44 at the third surface 36. Since angle B is not a right angle, the reflected light 70 strikes the second surface 44 at a non-right angle, and because the index of refraction of transparent acrylic plastic (the preferred material for structure 34) is different from that of air, reflected light 70 is refracted at surface 44 so that the optical path of the exiting light 72 is skewed from the optical path of the reflected light 70. As the exiting light 72 proceeds through an aperture or transparent section of a thickness of tape (not shown) between surfaces 44 and 60, such light as an optical signal is incident upon the inner surface 60 of the window 40 at a non-right angle. Since the acrylic plastic material in the window 40 has an index of refraction different from that of air, the optical signals 72 are again refracted to produce twice-refracted signals 74 along an optical axis that is skewed relative to the axis of signals 72. Signals 74 incident upon the outer surface 58 of the window 40 are refracted a third time to produce emerging signals 68 having an optical axis that is skewed with respect to the axis of signals 74 and that is substantially parallel to the first surface 42. All of these refractions are compensated for to produce the emerging signals 68 parallel to plane 56 by selecting a proper angle for angle A. The magnitude of this angle A is a function of the magnitude of the angles B and C and the index of refraction of the material (or the indices of refraction of the materials) of which the prism 36 and the window 40 are formed. For the preferred embodiment of the structure 34, wherein the prism 36 and window 40 are both formed of transparent acrylic plastic material having an index of refraction of 1.49, and the angles B and C are ninety-one and eighty-nine degrees, respectively, the magnitude of angle A is 44.836 degrees.

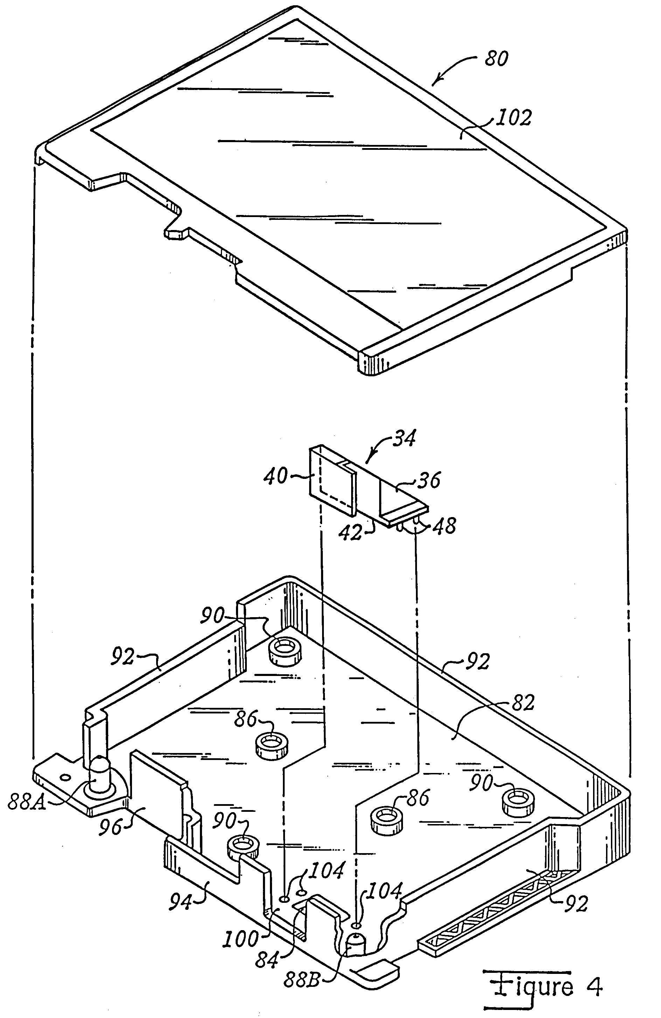

The light reflecting structure 34 of the present invention as described above is incorporated into a magnetic tape cartridge to produce an improved tape cartridge. Referring to Fig. 4, there is shown an exploded perspective view of the partial skeleton of a tape cartridge 80 including a baseplate 82 having an aperture 84, support bosses 86 for tape hubs, tape guides 88a, 88b, support bosses 90 for drive belt rollers, a plurality of sidewalls 92 around the perimeter of the baseplate 82, a front wall 94 having a recess 96 and an opening 100, a top cover 102, and integrated light reflecting structure 34 according to the present invention. The baseplate 82, sidewalls 92, front wall 94, and top cover 102 are all preferably formed of a polymeric material that may be adhesively or ultrasonically bonded together in conventional manner.

Mounting holes 104 in the baseplate 82 near the opening 100 are arranged to accommodate the pegs 48 protruding from structure 34 to allow the pegs 48 to be inserted therein for mounting the structure 34 onto the baseplate 82. The pegs 48 are bonded within corresponding holes 104 using adhesive or ultrasonic welding in conventional manner. As mounted, the first surface 42 of the prism 36 preferably fits over and completely covers the aperture 84 in the baseplate 82, and the window 40 preferably fits into and substantially covers the opening 100 in the front wall 94. Thus, the structure 34 of the present invention serves as the reflecting prism for reflecting optical signals entering the cartridge 80 and also closes off the opening 100 in the front wall 94 and the aperture 84 in the baseplate 82.

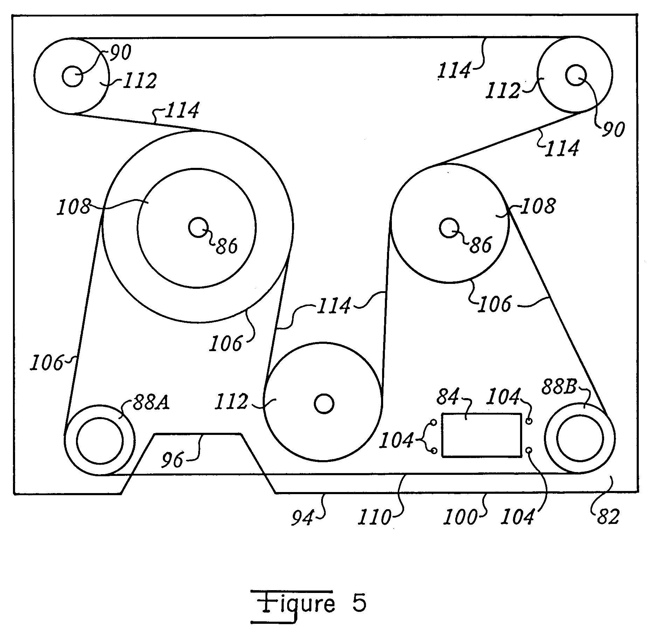

Before the structure 34 can be mounted onto the baseplate 82, however, the magnetic tape to be housed within the cartridge 80 must first be incorporated into the cartridge 80. Fig. 5 shows a top view of the baseplate 82 before structure 34 is mounted therein, and shows the manner in which the tape is situated within the cartridge. A supply of the magnetic tape 106 stored within the cartridge is wound around the tape hubs 108 which are rotatably mounted on the support bosses 86 of the baseplate 82. An end of the tape 106 is attached to each hub 108. Preferably, the ends of the tape 106 include holes or transparent portions that pass light therethrough to allow detection of the ends. The length of the tape 106 between the two hubs 108 passes around tape guide 88a, in front of recess 96, between aperture 84 and the opening 100 in the front wall 94, and around tape guide 88b to establish a tape path 110 near the front wall 94 that passes between the aperture 84 and the opening 100 in the front wall 94 to enable the ends of the tape 106 to be detected.

Fig. 5 also shows the relative positioning of the belt-drive system within the cartridge. The belt drive system conventionally includes a resilient belt 114 and three belt rollers 112 for driving the belt 114. The belt rollers 112 are mounted into the support bosses 90 in the baseplate 82, and the resilient belt 114 passes around these rollers 90 and over the periphery of each of the two rolls 108 of tape. Such belt drive systems are known in the art and are not described further herein.

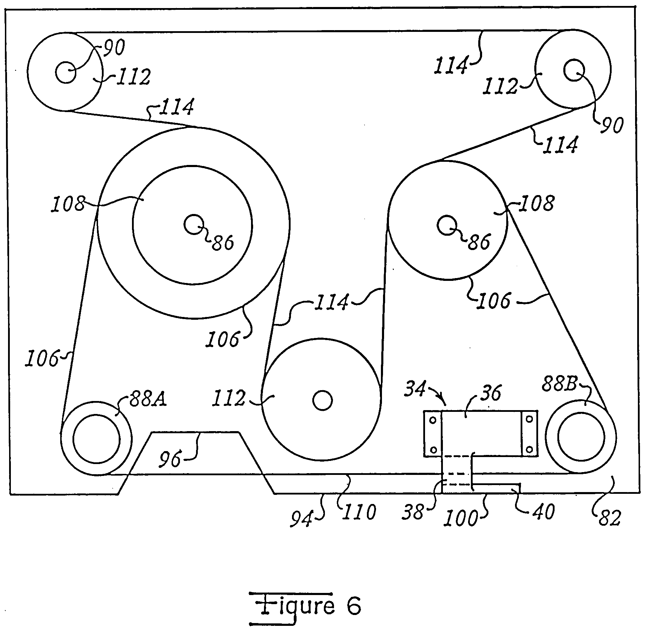

Once the supply of magnetic tape 106 is installed with a length thereof positioned along the path near the front wall 94, the integrated structure 34 of the present invention may be mounted onto the baseplate 82. Fig. 6 shows a top view of the baseplate 82 with the structure 34 mounted in place. As shown in Fig. 6, the structure 34 fits over and completely covers the aperture (not shown) in the baseplate 82, and the optical window 40 fits within and covers the opening 100 in the front wall 94. The bridge 38 separates the prism 36 from the optical window 40 and arches over the tape 106 in the tape path 110 that is disposed between the prism 36 and the window 40. Alternatively, the bridge 38 may pass beneath the tape 106 in the tape path 110 to retain the window 100 in positional orientation relative to the prism 36.

After the structure 34 is mounted on the baseplate 82, the top cover 102 is secured to the sidewalls 92 and the front wall 94 in conventional manner such as by ultrasonic welding or adhesive attachment to enclose the magnetic tape 106 and the light reflecting structure 34 of the present invention within the cartridge 80.

## Claims

1. A light reflecting structure for incorporation into a tape cartridge to transfer light between axes normal to and parallel to a baseplate of the tape cartridge, characterized by a prism having a first optical surface for orientation substantially parallel to the plane of the baseplate and a second optical surface substantially orthogonally oriented with respect to the first surface, and a third reflective surface oriented at a selected angle with respect to the first surface for reflecting optical signals between said first and second surfaces, by an optical window spaced from the prism near the second surface and oriented for passing optical signals therethrough to or from the prism; and by a bridge having one end attached to the prism and another end attached to the optical window for structurally supporting the window relative to the prism to form a single structure.

2. The light reflecting structure according to claim 1, characterized in that the selected angle is less than 45 degrees, in that the second surface is oriented at greater than a right angle with respect to the first surface, and in that a surface of the optical window is oriented at less than a right angle with respect to first surface.

3. The light reflecting structure according to claim 1, characterized in that the selected angle is selected to direct optical signals emerging from the optical window along an optical signal path which is parallel to the first surface of the prism.

4. A light reflecting structure according to claim 1 characterized in that the baseplate of the tape cartridge includes an aperture for passing optical signals therethrough, relative to the baseplate which includes a plurality of sidewalls extending upward from the baseplate and including a front wall extending upward from said baseplate with an aperture in the front wall for passing optical signals therethrough; in that a supply of magnetic tape is supported on the baseplate for movement within the tape cartridge along a path near the front wall; in that a cover is disposed over the sidewalls and front wall to enclose the supply of magnetic tape within the tape cartridge; in that the first optical surface of the prism is optically aligned with the aperture in the baseplate for passing optical signals therethrough, and the second optical surface of the prism is substantially orthogonally oriented with respect to the first surface and is positioned inwardly of the tape path for passing optical signals therethrough, and the third reflective surface of the prism is oriented at a selected angle with respect to the first surface for reflecting optical signals between the first and second surfaces; and in that the optical window of the prism is positioned in the aperture in the front wall outwardly of the tape path and in optical alignment with the second surface of the prism for passing optical signals therethough; and in that the first end of the bridge is attached to the prism and a second end of the bridge is attached to the optical window for tranversing the tape path to support the optical window relative the prism.

5. The light reflecting structure according to claim 4 characterized in that the selected angle is less than 45 degrees, the second surface is oriented at greater than a right angle with respect to the first surface, and a surface of the optical window adjacent the tape path is oriented at less than a right angle with respect to the first surface.

6. The light reflecting structure of claim 5 characterized in that the selected angle is selected to direct optical signals emerging from the optical window to have an optical signal path which is normal to the tape path and to the first surface of the prism.

7. The light reflecting structure according to any of the preceding claims characterized in that the prism and the window and the bridge are integrally formed of a transparent plastic material.

8. The light reflecting structure according to any of the preceding claims characterized in that the transparent plastic material is acrylic material.
